Europäisches Patentamt

European Patent Office

Office européen des brevets

(11) Publication number: **0 015 107**
**A1**

## EUROPEAN PATENT APPLICATION

(21) Application number: **80300380.5**

(22) Date of filing: **08.02.80**

(51) Int. Cl.³: **B 65 F 3/00**
**B 60 P 7/02**

(30) Priority: **13.02.79 GB 7905057**
**03.08.79 GB 7927086**

(43) Date of publication of application:
**03.09.80 Bulletin 80/18**

(84) Designated Contracting States:
**BE DE FR GB LU NL**

(71) Applicant: **CRAVEN TASKER (SHEFFIELD) LIMITED**
**Staniforth Road**
**Darnall Sheffield S9 4LL(GB)**

(72) Inventor: **Mellors, Norman**
**469 Whirlowdale Road**
**Sheffield(GB)**

(74) Representative: **Paget, Hugh Charles Edward et al,**
**MEWBURN ELLIS & CO. 70/72 Chancery Lane**
**London WC2A 1AD(GB)**

(54) **Refuse carrying vehicle.**

(57) A vehicle for carrying baled refuse and including a fixed side wall a drop down side wall (16) and a pivotable roof structure (18), the roof structure including a panelled portion (24) and an area of flexible sheeting (26) extending between the panelled portion (24) and the upper edge of the fixed side wall (14).

FIG. 1

-1-

## Refuse carrying vehicle

The invention relates to a vehicle for carrying refuse to a tipping site or dump in the form of bales.

Baled refuse is invariably extremely foul smelling and dirty. In addition, the bales are usually held together in a very tenuous manner, that is to say with very little cohesion between the substances of which they are composed, so that it is necessary for the vehicle which is to carry them to be totally enclosed when travelling on the road. A conflicting requirement is that the bales must be able to be quickly and easily unloaded from the vehicle at the tip or dump where they are to be stacked for consolidation of the rubbish.

The invention as claimed is intended to provide a remedy and seeks to solve the problem of how to transport baled refuse quickly and safely to a tipping site or dump, that is to say by the provision of a load-carrying vehicle which will be very stable when loaded and also when travelling empty.

The advantages offered by the invention are mainly that by virtue of a drop down side wall being devoid of upstanding posts or pillars intermediate the ends of the body the bales of refuse can very easily be removed by fork lift trucks. A further advantage offered by the invention resides in the fact that the design of the roof structure affords the greatest possible safeguards against loose items of refuse blowing away and allows unimpeded removal of the bales of refuse at the tipping site or dump whilst offering the smallest possible area against which side winds can act when in its raised position. Yet a further advantage offered by the invention is that a safety device associated with the roof structure ensures that the vehicle can be operated with safety, for example in windy or gusty conditions.

One way of carrying out the invention is described in detail below with reference to the drawings in which:-

Fig. 1 is a perspective view on one side of a load-carrying vehicle embodying the invention;

Fig. 2 is a schematic rear view thereof;

Fig. 3 is a perspective view on the other side of the vehicle;

Fig. 4 is a perspective view, drawn to a somewhat larger scale than Figs. 1 to 3, which illustrates one of a plurality of securing devices for a plurality of drop-down doors with which the vehicle is provided;

Fig. 5 is a sectional view on the line 5-5 in Fig. 4;

Fig. 6 is a view similar to Fig. 4 showing the securing device in a released condition; and

-3-

Fig. 7 is a detail view which illustrates a safety device which will presently be described.

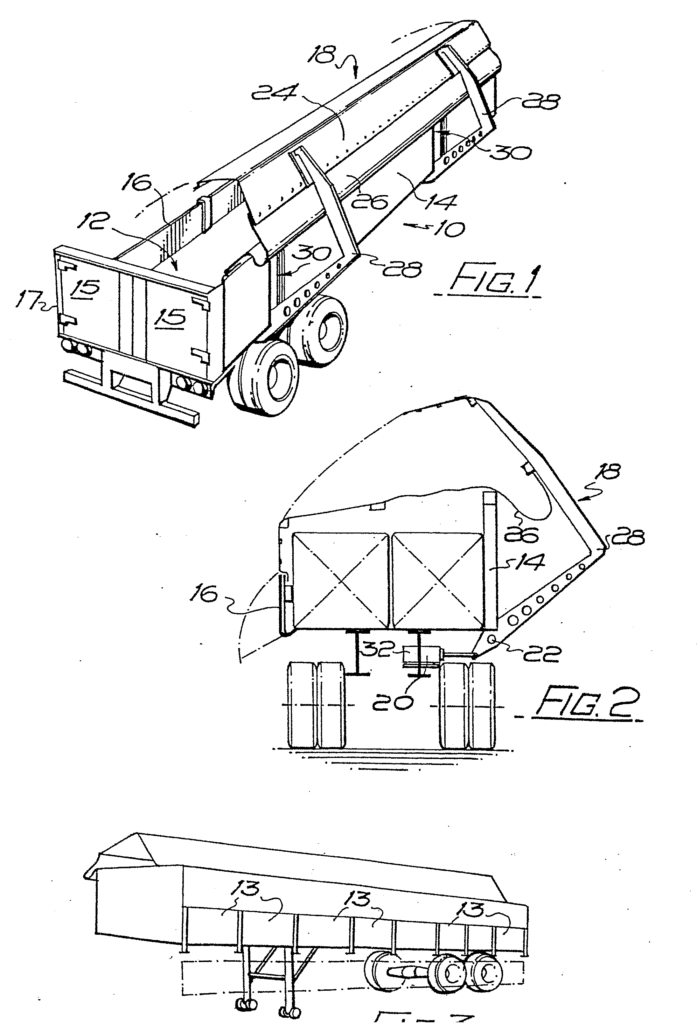

Referring now to Figs. 1 to 3 of the drawings, the load-carrying vehicle there illustrated is a semi-trailer type vehicle having a body generally indicated 10. The body 10 has a flat floor 12, a fixed longitudinal side wall 14 and an oppositely disposed drop-down longitudinal side wall 16, the latter being of a somewhat lesser height than the side wall 14 and being constituted by a plurality of drop-down doors 13. The body is also provided with a pair of openable rear doors 15 hingedly connected, respectively, to the rearward portion of the fixed longitudinal side wall and to an upstanding post 17 on the opposite side.

A roof structure, generally indicated 18, is pivotally movable, by power-operated means generally indicated 20, about the axis of a shaft 22 which extends, as shown, longitudinally of the vehicle at a height just below that of the floor 12. The roof structure includes a panelled portion 24 which, when the roof structure is closed to closely overlie the body, is disposed immediately above and engageable with the drop-down side wall. The roof structure also includes an area of flexible synthetic plastics sheeting 25 extending between said panelled portion and the upper edge of the fixed longitudinal side wall 14.

The roof structure is carried by a pair of cranked arms 28 each of which is connected at one end to the shaft 22 and at its other end to the panelled portion 24. As shown, the cranked arms are disposed at spaced locations between the ends of the body, and the fixed side wall of the body is provided with pockets 30 for the reception of the upstanding portions of the arms when the roof structure has been moved to the closed position closely overlying the body.

The power-operated means 20 for pivotally moving the roof structure between its closed and open positions includes a hydraulic ram 32, and an electric motor (not shown) drivably connected to a hydraulic pump (not shown) for powering the ram. The hydraulic ram is connected to a lever which is fast with the shaft 22 at a point substantially midway between the arms 28.

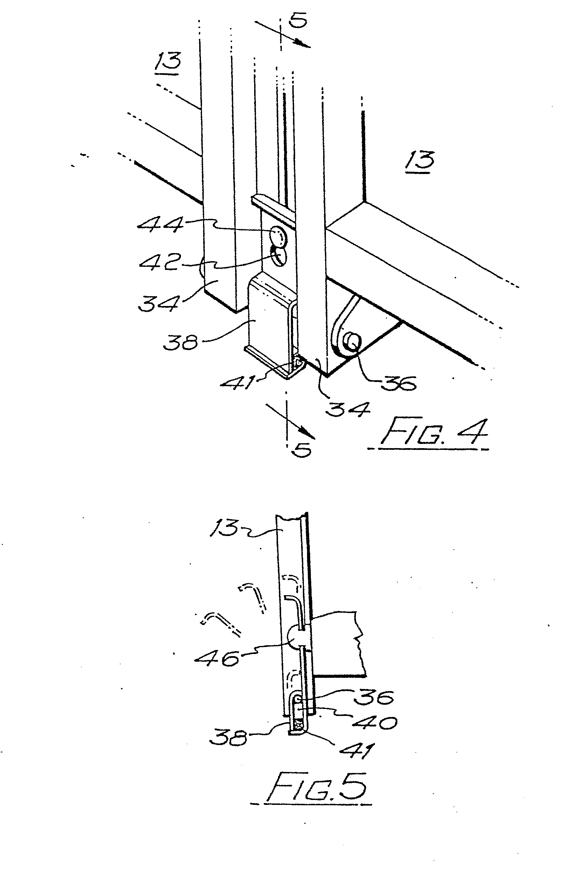

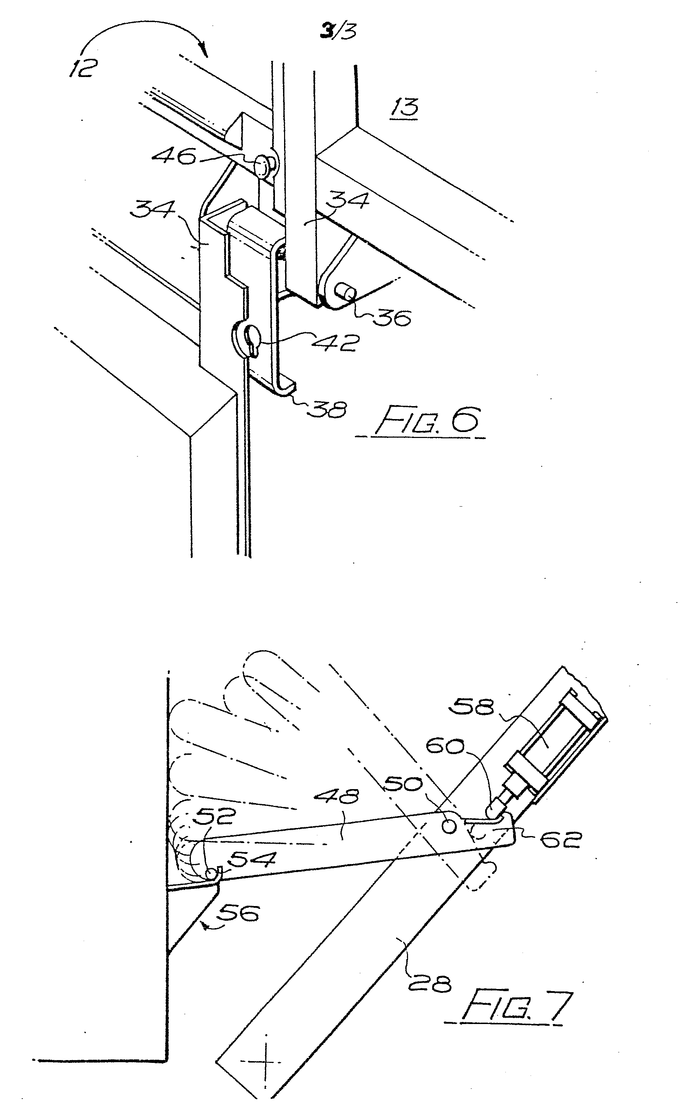

Referring now in particular to Figs 3 to 6, it will be seen that when the drop-down doors 13 are in their dropped position, as shown in chain-dotted lines in Fig. 3, the entire side of the vehicle is open, that is to say, access is not impeded by the presence of upstanding posts or pillars intermediate the ends of the body. In other words, the side of the vehicle is devoid of upstanding posts or pillars to which the doors might have been connected when in their raised condition.

As illustrated in Figs 4 to 6, the drop-down doors are pivotally connected to the vehicle body by depending arms 34 constituted by downwardly projecting portions of angle sections which form side members of the doors. Pivot pins 36, by which the doors are pivotally connected to the vehicle body, are horizontally disposed and extend longitudinally of the vehicle a short distance below the floor level of the loading space to which the doors give access.

The doors are secured in their raised, operative positions by securing devices each of which includes a latch element 38 pivotally connected to the body of the vehicle about the pivot pin 36 by means of which the pair of doors concerned is connected to the body. However, as shown in Fig. 5, an aperture 40 in the latch element through which the pivot pin extends is an elongate aperture so that when the doors are closed, as shown in Fig. 4, the latch element can be moved up and down to a limited extent determined by the length of said elongate aperture. The purpose of this is so that a keyhole shaped aperture 42 in the latch element can be engaged with a mushroom shaped head 44 of a pin generally indicated 46 which projects laterally from the body of the vehicle at floor level. A resilient pad 41 is

-6-

located, as shown, at one end of the elongate aperture in the latch element for a purpose which will presently be explained.

The arrangement is such that when the pair of doors concerned have been closed, the latch element can be pivoted upwards to partially overlie a marginal edge part of each door and to bring the mushroom shaped head of the projecting pin through the wider part of the keyhole shaped aperture in the latch element, the latter then being allowed to fall vertically through a limited distance to bring a narrower part of the keyhole shaped aperture in the latch element into engagement with a stem portion of the projecting pin 46. In this way the drop-down doors concerned are retained in their closed position until the latch elements are raised to enable them to be detached from the projecting pins.

When the latch element is raised to enable it to be detached from the projecting pin 46, the distance through which it must be displaced is such that the resilient pad 41 is compressed. Consequently, the pad acts as a safety device to prevent the accidental disconnection of the latch element, for example in circumstances where dynamic shocks are brought about as the vehicle is being driven over uneven surfaces.

Referring now to Fig. 7, this illustrates the provision of a safety device which is associated with one of the cranked arms 28 so that when the roof structure has been fully raised, as shown in Figs. 1 and 2, a strong or gusting wind cannot either take it beyond that fully raised condition or blow it shut by overloading the power-operated means 20. The safety device is constituted by a link member 48 pivotally connected near one end to the cranked arm 28 by which it is carried by means of a pivot pin 50. At its other end the link member carries a laterally projecting detent peg 52 which is arranged to engage an upstanding hooked portion 54 of an abutment member generally indicated 56 which is welded to the fixed side wall 14 of the vehicle.

The arrangement is such that when the roof structure has been closed and the arms 28 lie close to the side wall 14 of the vehicle the end of the link member which carries the laterally projecting detent peg rests against the side wall. Consequently, when the roof structure is raised, and the arms 28 gradually move away from the side wall 14, the link member slides down the side wall until it reaches a horizontal position from where it is able to fall freely, over-centre, into its operative position in which it is shown in full lines in Fig. 7. In this position it will be seen that the link member can act either as a strut, that is to say by moving into abutment with the side wall 14 of the vehicle, to resist any tendency for the roof structure to be blown shut, or can act in tension when the laterally projecting detent peg 52 contacts the upstanding hooked portion 54 of the abutment member 56 to resist any tendency for the roof structure to be blown beyond its fully raised condition.

Means are provided for rendering the safety device inoperative when it is again desired to close the roof structure, these means being constituted by a pneumatic or hydraulic ram 58 the piston rod end 60 of which can be extended, as shown in chain-dotted lines, to act against a heel portion 62 of the link member 48. A control lever (not shown) for operating the pneumatic or hydraulic ram is mounted on the front of the load-carrying body adjacent to other control mechanism (not shown) for operating the ram 32.

The arrangement is such that the baled refuse can be loaded into the body through its opened rear end. The vehicle can then be driven to the tipping site or dump with the baled refuse totally enclosed so that even in windy conditions no pieces of refuse becoming free from the bales can blow away. At the tipping site or dump, the roof structure can be very quickly and easily moved to its open position by the power-operated means, the side wall 15 can be dropped down, and fork lift trucks can be used to remove the bales of refuse through the open side of the vehicle and to stack them where the rubbish is to be consolidated. A relatively fast operating cycle can be maintained when using such a vehicle. It will be understood that the fact that the roof structure can be lifted completely away from the load-carrying body and the fact that the body is devoid of posts or pillars intermediate its ends for the securement of the drop-down doors in their closed positions greatly facilitates the unloading of the bales by fork lift trucks and avoids rupture of the bales by contact with the roof or other structure during the initial lifting of the bales. It will also be understood that the pivotting of the roof structure about the axis of the shaft 22 and the fact that the latter is located at or in the region of the height of the floor of the body, results in only a part of the width of the roof structure projecting above the height of the fixed side wall when in the open position so that it offers a minimum of additional area against which high side winds can act. The vehicle has a low centre of gravity due to its low overall height and to the lightweight construction of the roof structure. In addition, the vehicle is of relatively light weight when empty. The fact that one longitudinal side wall of the body is fixed and is of full body height results in a

-10-

strong construction for carrying the bales of refuse which are relatively heavy, that is to say several times heavier than a comparable volume of refuse which has not been compacted and baled. The drop-down side wall and the means for securing it in the raised position are sufficiently strong to prevent the bales from falling sideways from the vehicle when the vehicle is being driven.

Various modifications may be made without departing from the scope of the invention. For example, it will be understood that the vehicle need not necessarily be a semi-trailer type vehicle but that it could be a truck-type vehicle. It will also be understood that the power-operated means for pivotally moving the roof structure between its closed and open positions may be differently constructed. For example, the ram for lifting and lowering the roof structure could be a pneumatic ram instead of a hydraulic ram. Furthermore instead of having an electric motor for driving a separate hydraulic or pneumatic pump, the vehicle could be adapted so that it could be directly coupled to a hydraulic or pneumatic system of a towing vehicle.

CLAIMS

1. A vehicle for carrying baled refuse to a tipping site or dump, the vehicle having a body with a flat floor; a longitudinal side wall which is fixed with respect to said flat floor; an oppositely disposed drop-down longitudinal side wall; and openable rear doors through which the bales of refuse can be loaded into the vehicle, characterised in that the vehicle is provided with a roof structure (18) which is pivotally movable, by power-operated means (20), about an axis extending longitudinally of the vehicle in the region of the height of the floor (12), the roof structure (18) including a panelled portion (24) overlying and engageable with the drop-down side wall and also including an area of flexible sheeting (26) extending between said panelled portion and an upper edge of the fixed longitudinal side wall (14).

2. A vehicle according to claim 1 in which the drop-down side wall is constituted by a plurality of drop-down doors (13), and the body (10) is devoid of upstanding posts intermediate its ends whereby that side of the body (10) can be completely opened to allow unimpeded access, the drop-down doors (13) being pivotally mounted about fixed axes spaced below the floor height of the body and securing devices for said doors being located in the

0015107

region of the floor height of said body.

3. A vehicle according to claim 2, in which the securing devices include respective latch elements (38) pivotally connected to the body (10) of the vehicle, a part of each latch element being capable of limited movement towards or away from the pivotal connection whereby a keyhole shaped aperture (42) in the latch element (38) can be engaged with a mushroom shaped head (44) of a projecting pin (46), the arrangement being such that when the doors (13) have been closed, the latch elements (38) can be pivoted upwards to partially overlie marginal edge portions of the doors (13) and to bring the mushroom shaped heads (44) of the projecting pins (46) through the wider parts of the keyhole shaped apertures (42) in the latch elements (38), said latch elements (38) then being allowed to fall vertically downwards through a limited distance to bring a narrower part of each keyhole shaped aperture (42) into engagement with a stem portion of the projecting pin concerned.

4. A vehicle according to claim 3, in which the part of each latch element (38) which has been said to be capable of limited movement towards or away from its pivotal connection is arranged to be so by virtue of a pivot pin (36) constituting the connection extending through an elongate aperture (40) in the latch element (38).

5. A vehicle according to claim 4, in which said pivot pin (36) forms part of a pivotal connection by means of which an immediately adjacent drop-down door (13) is connected to the body (10) of the vehicle.

6. A vehicle according to claim 1, in which the power-operated means (20) for pivotally moving the roof structure (18) between a closed position in which it closely overlies the body (10) and an open position in which it is raised clear of the body (10) includes a hydraulic ram (32).

7. A vehicle according to claim 1 in· which the roof structure (18) is carried by at least a pair of cranked arms (28) connected to the power-operated means (20), said cranked arms (28) being disposed at spaced locations between the ends of the body (10).

8. A vehicle according to claim 7, in which the fixed side wall (14) of the body has pockets (30) for accommodating the arms (28) when the roof structure (18) has been moved to the closed position.

9. A vehicle according to claim 7 provided with a safety device associated with one of the cranked arms (28), the safety device being constituted by a link member (48) pivotally connected near one end to said cranked arm (28), the arrangement being such that when the roof structure (18) has been closed and the arms (28)

lie close to the fixed side wall (14) the other end of the link member (48), which at that time is upwardly inclined, rests against the side wall (14) so that as the roof structure (18) is subsequently raised, and the arms (28) gradually move away from the side wall (14), the link member (48) slides down the side wall (14) until it reaches a horizontal position from where it is able to fall freely, over-centre, into an operative position in which a projecting detent peg (52) carried by said other end of the link member (48) engages an abutment member (56) carried by the fixed side wall (14) of the vehicle, means being provided for rendering the safety device inoperative when it is again desired to close the roof structure (18).

0015107

FIG.1

FIG.2

FIG. 4

FIG.5

12

13

46

34

34

36

42

38 _FIG. 6_

58

60

48

50

52

54

56

62

28 _FIG. 7_

European Patent Office

**EUROPEAN SEARCH REPORT**

Application number

EP 80 30 0380

| | DOCUMENTS CONSIDERED TO BE RELEVANT | | CLASSIFICATION OF THE APPLICATION (Int. Cl. 4) |
|---|---|---|---|
| Category | Citation of document with indication, where appropriate, of relevant passages | Relevant to claim | |
| | FR - A - 2 264 682 (A.N.F. FRANGE-CO) <br> * Page 2, line 16 - page 4, line 37; figures 1-3 * <br> -- | 1 | B 65 F 3/00 <br> B 60 P 7/02 |
| | DE - A - 2 601 128 (ZUIDEMA) <br> * Page 4, paragraph 1 - page 5, last paragraph; figures * <br> -- | 1,6 | |
| | FR - A - 2 193 726 (RANSHOFEN-BERN-DORF) <br> * In its entirety * <br> -- | 1,2 | TECHNICAL FIELDS SEARCHED (Int.Cl. 4) |
| | FR - A - 896 921 (BRAUD) <br> * In its entirety * <br> -- | 2-5 | B 65 F <br> B 60 P <br> B 62 D <br> B 60 J <br> B 61 D |
| | US - A - 3 788 684 (JOHNSON) <br> * Column 2, line 26 - column 3, line 16; figures 1,2,7,8 * <br> -- | 3 | |
| | DE - A - 2 159 891 (KIAB KRAFT-STANDENS INDUSTRI) <br> * In its entirety * <br> ---- | 1,2,4, 5 | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

The present search report has been drawn up for all claims

| Place of search | Date of completion of the search | Examiner |
|---|---|---|
| The Hague | 14-05-1980 | MARTENS |

EPO Form 1503.1  06.78